# FASCICULE DE BREVET EUROPEEN

(11) **EP 1 791 719 B1**
(45) Date de publication et mention de la délivrance du brevet: **15.07.2009**
(21) Numéro de dépôt: 05799846.0
(22) Date de dépôt: 12.09.2005
(51) Int. Cl.: B60N 2/34, B62D 33/06

(54) **CABINE DE VEHICULE AUTO-MOTEUR**
KABINE FÜR EIN SELBSTANGETRIEBENES FAHRZEUG
CABIN OF A SELF-PROPELLED VEHICLE

(30) Priorité: 13.09.2004 FR 0452032
(43) Date de publication de la demande: 06.06.2007
(73) Titulaire: RENAULT TRUCKS, 69800 St Priest (FR)
(72) Inventeur: POUILLE, Fabrice, 78220 VIROFLAY (FR)
(74) Mandataire: Putet, Gilles
(86) Numéro de dépôt international: PCT/FR2005/050732
(87) Numéro de publication internationale: WO 2006/030155

(56) Documents cités:
- EP-A- 0 036 758
- EP-A- 0 388 380
- DE-A1- 4 215 111
- DE-A1- 10 237 782
- DE-U1- 7 819 046
- US-A1- 2004 003 463

## Description

### Domaine technique

L'invention se rattache au domaine d'industrie des véhicules industriels et plus particulièrement des camions. Elle concerne plus spécifiquement un aménagement de la cabine de conduite d'un tel véhicule. Elle vise plus particulièrement l'agencement concernant la couchette de repos.

### Techniques antérieures

De façon générale, les cabines de conduite sont équipées d'une couchette de repos, permettant au chauffeur de s'allonger ou de dormir pendant sa période de repos. Une telle couchette est disposée dans la partie arrière de la cabine, derrière les sièges du conducteur et du passager. On conçoit que le volume global d'une cabine de conduite est relativement limité, et qu'il est donc nécessaire de prévoir un aménagement optimisé, pour combiner à la fois le volume du poste de conduite et celui de la couchette. Dans beaucoup de solutions existantes, la couchette peut être rendue pivotante par rapport à la cabine, pour pouvoir être rabattue sur la paroi arrière de cette dernière lorsqu'elle n'est pas utilisée. Un exemple d'une telle couchette est décrit dans le document EP-A-0 036 758. Cette couchette est formée en partie par le dossier du siège fixe du passager, lorsqu'il est rabattu. Bien que donnant satisfaction, ces solutions nécessitent la présence de points d'ancrage des charnières de pivotement qui soient particulièrement solides. En outre, les manipulations nécessaires à la descente et la remontée de la couchette ne sont pas très ergonomiques, et nécessitent un effort certain de la part du conducteur.

Dans les solutions où la couchette est fixe, on conçoit que ses dimensions sont relativement réduites, et ne permettent pas au chauffeur d'être totalement à son aise lorsqu'il est allongé.

Un premier problème que se propose de résoudre l'invention est celui de l'optimisation de l'aménagement intérieur de la cabine. L'objectif de l'invention est de privilégier l'espace de conduite, notamment au niveau du siège du conducteur lorsque celui-ci est en position de conduite, tout en permettant également au conducteur de bénéficier d'une couchette de dimensions satisfaisantes, ainsi que d'un espace libre dans la cabine, pour lui permettre de disposer ses effets personnels lors des périodes de repos.

### Exposé de l'invention

L'invention concerne donc un aménagement des cabines de véhicules auto-moteurs. Cette cabine comporte de façon connue un siège conducteur et un siège passager, ainsi qu'une couchette, qui est située à l'arrière de ces sièges.

Selon une première caractéristique de l'invention, une partie de cette couchette est formée par le dossier du siège passager, lorsque ce dernier est rabattu sur l'assise, et que l'ensemble du siège passager est translaté vers l'arrière.

Autrement dit, le siège passager peut coulisser sur des rails longitudinaux, et la face arrière du dossier constitue une partie de la couchette, dans laquelle elle vient s'intégrer lorsque le siège est reculé après que le dossier ait été rabattu. En conséquence, le volume situé au niveau du siège du passager est libéré lorsque la couchette devient opérationnelle, et le chauffeur peut en bénéficier pour y disposer ses effets personnels ou autres.

Selon une autre caractéristique de l'invention, la couchette est mobile en translation longitudinale. Elle peut se déplacer entre deux positions, à savoir une position d'utilisation et une position escamotée. Dans la position escamotée, elle est partiellement encastrée dans la paroi arrière de la cabine. Autrement dit, dans une situation de conduite, lorsque la couchette n'est donc pas utilisée, celle-ci est repoussée vers l'arrière, et pénètre partiellement dans un logement prévu à cet effet dans le fond de la cabine, dans la paroi arrière. A l'inverse, lorsque le conducteur souhaite utiliser la couchette, il peut avancer le siège conducteur, puis avancer la banquette, en extrayant la partie encastrée dans la paroi arrière de la cabine. Il bénéficie alors d'une couchette de dimensions satisfaisantes pour pouvoir se reposer.

Selon une autre caractéristique de l'invention, la couchette présente une moindre largeur dans zone située derrière le siège du conducteur, par rapport à la zone située derrière le siège passager. Autrement dit, la couchette est plus étroite derrière le siège passager, zone dans laquelle le conducteur dispose ses pieds lorsqu'il est en position allongée. A l'inverse, la couchette est plus large dans la partie recevant le haut du corps lorsque le chauffeur s'allonge. La couchette possède donc une forme globalement trapézoïdale, satisfaisante en terme d'ergonomie, et n'occupant qu'un faible espace dans la zone où se trouve le siège du conducteur. On peut ainsi aménager la cabine en utilisant un siège conducteur volumineux et plus confortable, et pouvant adopter une inclinaison vers l'arrière proche de celle observée dans les véhicules particuliers.

### Description sommaire des figures

La manière de réaliser l'invention, ainsi que les avantages qui en découlent ressortiront bien de la description des modes de réalisation qui suivent, à l'appui des figures annexées.
La figure 1 est une vue en perspective de trois-quarts avant d'une partie de la cabine d'un véhicule conforme à l'invention, dans laquelle le siège conducteur et le siège passager sont montrés en position opérationnelle.
La figure 2 est une vue en perspective de trois-quarts arrière de la cabine selon la figure 1, dans laquelle le siège conducteur n'a pas été représenté pour faciliter la compréhension.
Les figures 3 et 4 sont des vues en perspective sommaire de trois-quarts avant, montrant la couchette dans ses deux positions, respectivement escamotée et d'utilisation.
La figure 5 est une vue en perspective de trois-quarts avant de la même cabine, illustrant les rangements complémentaires.

### Manière de réaliser l'invention

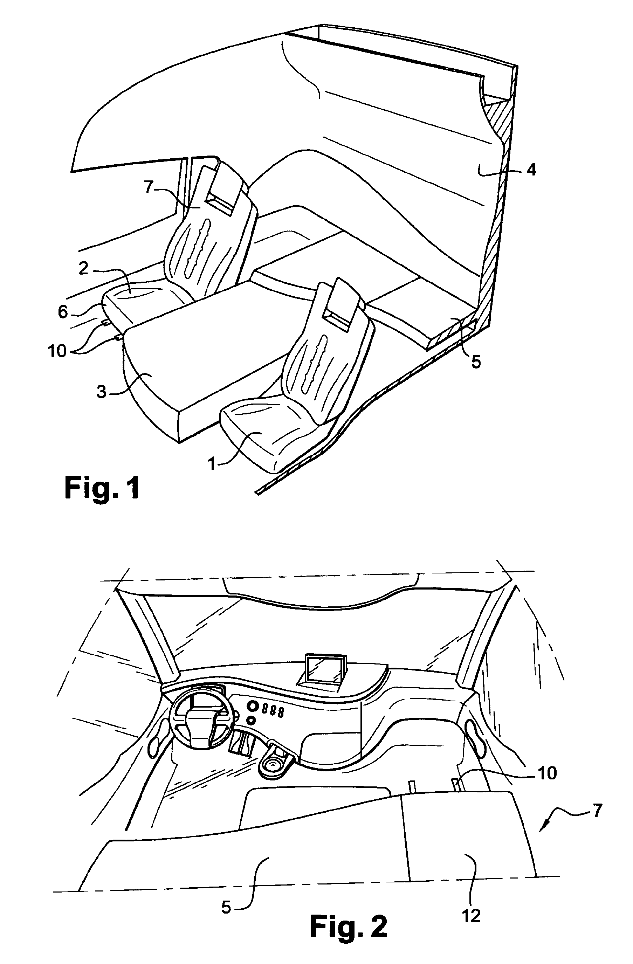

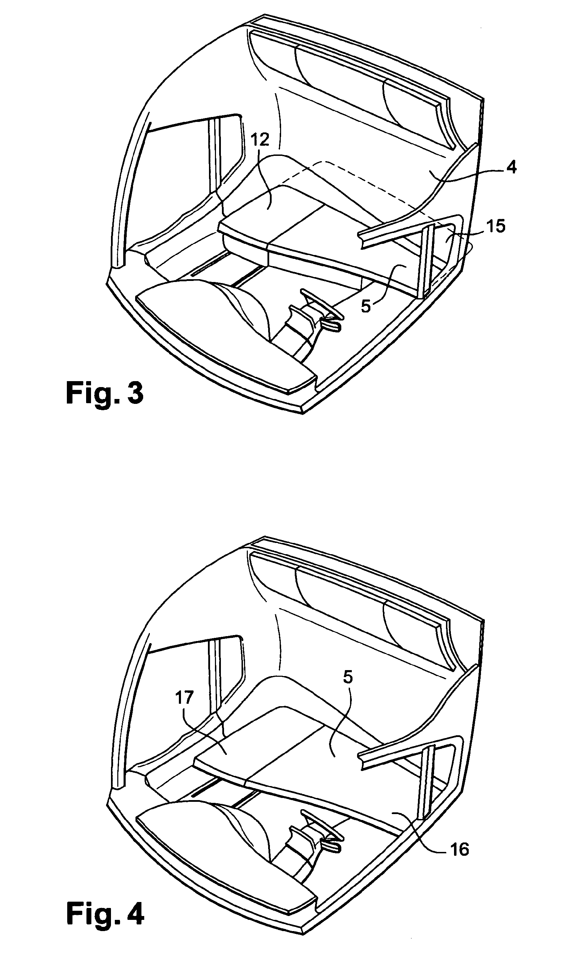

Comme illustré à la figure 1, la cabine d'un véhicule industriel de type camion, comporte un siège conducteur 1 et un siège passager 2 séparés par une console centrale 3 correspondant au volume occupé par des organes du moteur. Cette cabine comporte une paroi à l'arrière 4 et une couchette 5 située à l'arrière des sièges du conducteur 1 et du passager 2. En fonction du modèle de cabine, la console centrale 3 illustrée sur la figure 1 peut être absente de la cabine, comme c'est par exemple le cas sur la figure 3.

Conformément à l'invention, le siège passager 2 est repliable, de telle sorte que son dossier 7 peut se rabattre sur l'assise 6. Le siège passager 2 est monté coulissant sur des glissières 10 permettant de régler la position longitudinale du siège passager 2. Selon une caractéristique de l'invention, la face arrière 12 du dossier 7 du siège passager 2 forment une partie de la couchette 5, comme illustré à la figure 2. Pour arriver à la configuration illustrée de la figure 2, un mécanisme approprié dans le siège passager 2 permet de rabattre le dossier 7 sur l'assise 6, la face arrière 12 du dossier 7 est alors exposée vers le haut. Cette face arrière 12 est équipée d'un coussin de nature similaire au reste de la couchette pour former la partie tête de cette couchette. Ce coussin peut être présent en permanence à l'arrière du dossier 7, mais il peut également être rapporté sur le dossier 7 lorsque ce dernier est rabattu, et fixé par tout moyen approprié, notamment de bandes de tissu Velcro^{®}.

Le siège passager 2 peut être réglé longitudinalement en position par coulissement sur les rails 10. Pour s'intégrer dans la couchette 5, le siège passager 2 est alors reculé. Dans une forme de réalisation particulière, lorsque le siège recule et atteint sa position définitive, il se solidarise au reste de la couchette 5.

Selon une autre caractéristique de l'invention, illustrée aux figures 3 et 4, la couchette réglable longitudinalement peut être en partie encastrée dans la paroi arrière 4 de la cabine. Ainsi, comme illustré à la figure 3, la couchette 5 peut adopter une position reculée, correspondant à une configuration de conduite. Dans ce cas, l'arrière 15 de la couchette 5 est encastré en partie dans un logement prévu à cet effet dans la paroi arrière 4 de la cabine. La couchette 5 occupe alors un volume utile réduit à l'intérieur de la cabine, ce qui permet de bénéficier d'un espace suffisant au niveau du siège du passager pour positionner ce dernier de manière parfaitement ergonomique.

Lorsque la couchette devient opérationnelle, comme illustré à la figure 4, celle-ci est déplacée vers l'avant, par un système de rails coulissants, lui permettant d'occuper une surface plus importante dans la cabine de conduite. On notera que la forme de la couchette n'est pas rectangulaire, mais sensiblement trapézoïdale. Ainsi, la partie basse 16 de cette couchette, destinée à recevoir les pieds du conducteur, située derrière le siège conducteur, est plus étroite que la partie haute 17, destinée à recevoir la tête du chauffeur. Par cette configuration, on obtient à la fois un confort pour le chauffeur, qui bénéficie d'une surface suffisante dans la partie haute de la couchette, alors que la partie basse 16 n'occupe qu'une surface réduite pour ne pas trop fortement empiéter sur le volume du siège conducteur ergonomique. Bien entendu, le siège conducteur 1 peut être déplacé vers l'avant lorsque la couchette devient opérationnelle. Des systèmes de mémorisation de la position ergonomique du siège permettent, lorsque la couchette est escamotée, de faire revenir le siège passager dans la position ergonomique optimale.

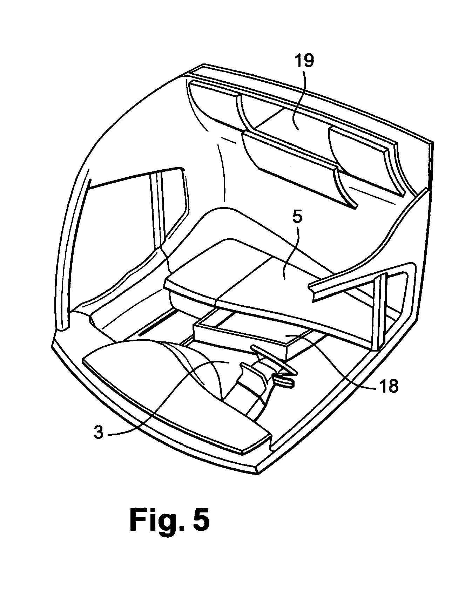

De façon complémentaire, et comme illustré à la figure 5, de multiples rangements peuvent être accessibles au chauffeur lorsqu'il se trouve sur sa couchette 5. Ainsi, un tiroir 18 peut être prévu sous le couchage, dans la partie centrale, au-dessus de la console centrale 3, ce tiroir présente une forme non rectangulaire, qui épouse le contour de la couchette sensiblement trapézoïdale. Des rangements 19 peuvent être prévus en partie haute, et aménagés dans le volume de la paroi arrière 4 de la cabine.

Il ressort de ce qui précède que l'aménagement conforme à l'invention permet de bénéficier d'une couchette très confortable pour le chauffeur, cette couchette présente une surface utile importante. Du fait que la couchette est partiellement escamotable à l'intérieur de la face arrière de la cabine, cette surface utile n'empiète pas sur le volume utile lors de la conduite, notamment au niveau du siège du conducteur. L'intégration du siège passager dans la couchette libère un volume important lorsque le chauffeur est en situation de repos.

## Revendications

1. Cabine de véhicule auto-moteur, comportant un siège conducteur (1), un siège passager (2) et une couchette (5) située à l'arrière des sièges passager (2) et conducteur (1), dans laquelle une partie (17) de la couchette est formée par le dossier (7) du siège passager (2) lorsque ce dernier est rabattu sur l'assise (6), **caractérisée en ce que** le siège passager peut coulisser sur des rails longitudinaux, et **en ce que**, pour s'intégrer dans la couchette, le siège passager (2) est reculé de manière que le volume situé au niveau du siège passager est libéré lorsque la couchette devient opérationnelle et lorsque le siège passager (2) est translaté vers l'arrière.

2. Cabine selon la revendication 1, **caractérisée en ce que** la couchette (5) est mobile en translation longitudinale, et peut se déplacer entre deux positions, à savoir une position d'utilisation et une position escamotée, dans laquelle elle est partiellement encastrée dans la paroi arrière (4) de la cabine.

3. Cabine selon la revendication 1, **caractérisée en ce que** la couchette (5) présente une moindre largeur dans la zone (16) située derrière le siège conducteur (1) par rapport à la zone (17) située derrière le siège passager (2).

4. Cabine selon la revendication 1, **caractérisée en ce qu'**elle comporte un tiroir de rangement (18) situé sous la couchette (5).

## Claims

1. Cabin of a self-propelled vehicle, including a driver's seat (1), a passenger seat (2) and a bunk (5) located behind the passenger seat (2) and the driver's seat (1), and in which part (17) of the bunk is formed by the backrest (7) of the passenger seat (2) when said backrest is folded down on the seat part (6), **characterized in that** the passenger seat can slide on longitudinal rails, and **in that**, in order to be integrated into the bunk, the passenger seat (2) is pushed back such that the volume taken up by the passenger seat is freed when the bunk comes into operation and when the passenger seat (2) is translated rearwards.

2. Cabin according to Claim 1, **characterized in that** the bunk (5) is able to undergo longitudinal translational movement and can move between two positions, namely a use position and a folded-away position in which it is partially housed in the rear wall (4) of the cabin.

3. Cabin according to Claim 1, **characterized in that** the bunk (5) is narrower in the area (16) behind the driver's seat (1) than in the area (17) behind the passenger seat (2).

4. Cabin according to Claim 1, **characterized in that** it includes a storage drawer (18) underneath the bunk (5).

## Patentansprüche

1. Kabine für ein selbstangetriebenes Fahrzeug, die einen Fahrersitz (1), einen Beifahrersitz (2) und eine hinter dem Beifahrersitz (2) und dem Fahrersitz (1) befindliche Schlafstelle (5) umfasst, bei der ein Teil (17) der Schlafstelle durch die Rückenlehne (7) des Beifahrersitzes (2) gebildet wird, wenn letztere auf die Sitzfläche (6) umgeklappt ist, **dadurch gekennzeichnet, dass** der Beifahrersitz auf längs verlaufenden Schienen gleiten kann und dass der Beifahrersitz (2) für eine Integrierung in die Schlafstelle derart zurückgeschoben wird, dass das im Bereich des Beifahrersitzes befindliche Volumen freigegeben wird, wenn die Schlafstelle einsatzbereit und der Beifahrersitz (2) nach hinten verschoben ist.

2. Kabine nach Anspruch 1, **dadurch gekennzeichnet, dass** die Schlafstelle (5) in Längsrichtung translatorisch verschiebbar ist und sich zwischen zwei Positionen bewegen kann, nämlich einer Verwendungsposition und einer versenkten Position, in der sie teilweise in die Rückwand (4) der Kabine eingebaut ist.

3. Kabine nach Anspruch 1, **dadurch gekennzeichnet, dass** die Schlafstelle (5) in dem hinter dem Fahrersitz (1) befindlichen Bereich (16) eine geringere Breite aufweist als in dem hinter dem Beifahrersitz (2) befindlichen Bereich (17).

4. Kabine nach Anspruch 1, **dadurch gekennzeichnet, dass** sie einen unter der Schlafstelle (5) befindlichen Aufbewahrungsschubkasten (18) aufweist.
